# EUROPEAN PATENT APPLICATION

(11) **EP 4 787 686 A1**
(43) Date of publication of application: **05.08.2026**
(21) Application number: 24872138.3
(22) Date of filing: 24.09.2024
(51) Int. Cl.: H02K 15/085

(54) **METHOD AND DEVICE FOR MANUFACTURING STATOR**

(30) Priority: 25.09.2023 JP 2023161777
(71) Applicant: NHK Spring Co., Ltd., Yokohama-shi, Kanagawa 236-0004 (JP)
(72) Inventor: KOBAYASHI Dai, Yokohama-shi, Kanagawa 236-0004 (JP); CHIBA Yuto, Yokohama-shi, Kanagawa 236-0004 (JP)
(74) Representative: Oppermann, Frank
(86) International application number: PCT/JP2024/033830
(87) International publication number: WO 2025/070347

(57) **Abstract**

Provided is a method for manufacturing a stator, capable of easily forming a power line by bending a projected portion. The method for manufacturing a stator to bend a projected portion 9 of a segment coil 7 held by a stator core 3, displaces a tip end portion 10a of a projected portion 9 outward in a radial direction of the stator core 3 to bend the projected portion 9 so as to be positioned at a first position, and displaces the tip end portion 10a of the bent projected portion 9 inward in the radial direction to bend back bent portions 12a and 12b of the projected portion 9 so as to be positioned at a second position displaced to an outer side in the radial direction with respect to an initial position before the bending.

## Description

### FIELD OF THE INVENTION

The present invention relates to a method and a device for manufacturing a stator for bending a projected portion of a segment coil held by a stator core.

### BACKGROUND OF THE INVENTION

As a conventional method and a conventional device for manufacturing a stator, there is one using an interlayer expansion member as disclosed in Patent Literature 1, for example.

In this manufacturing method and device, the interlayer expansion member is radially engaged with tip end portions of a plurality of projected portions of segment coils arranged in layers in a radial direction with respect to a stator core. In this state, the interlayer expansion member is moved outward in the radial direction of the stator core, to bend the projected portions outward in the radial direction.

In this manufacturing method and device, however, when the tip end portions of the projected portions are released from the engaged state with respect to the interlayer expansion member, the tip end portions of the projected portions are displaced inward in the radial direction according to spring-back. Since the amount of the spring-back is not constant, there is a problem that variation is likely to occur in positions of the tip end portions of the projected portions.

### CITATION LIST

### PATENT LITERATURE

PATENT LITERATURE 1: International Publication No. 2019/093515

### SUMMARY OF THE INVENTION

### PROBLEMS TO BE SOLVED BY THE INVENTION

The problem to be solved is that variation is likely to occur in a position of a tip end portion of a projected portion of a segment coil with respect to a stator core.

### MEANS FOR SOLVING THE PROBLEM

The present invention provides a method for manufacturing a stator. The manufacturing method displaces a tip end portion of a projected portion, which is relative to a stator core, of a segment coil held by the stator core to one of an outer side and an inner side in a radial direction to bend the projected portion so as to be positioned at a first position. Then, it displaces the tip end portion of the bent projected portion to the other of the outer side and the inner side in the radial direction to bend back a bent portion of the projected portion so that the tip end portion of the bent projected portion is positioned at a second position displaced to said one of the outer side and the inner side in the radial direction with respect to an initial position before the bending.

The present invention also provides a device for manufacturing a stator to bend projected portion, which is relative to a stator core, of a segment coil held by the stator core. The manufacturing device is provided with a tooth disposed on at least one side in a radial direction of the stator core with respect to a tip end portion of the projected portion, and a drive unit that moves the tooth in the radial direction to displace the tip end portion of the projected portion in the radial direction. Then, the manufacturing device displaces the tip end portion of the projected portion of the stator core to one of an outer side and an inner side in the radial direction to bend the projected portion so as to be positioned at a first position. Thereafter, the manufacturing device displaces the tip end portion of the bent projected portion to the other of the outer side and the inner side in the radial direction to bend back a bent portion of the projected portion so that the tip end portion of the bent projected portion is positioned at a second position displaced to said one of the outer side and the inner side in the radial direction with respect to an initial position before the bending.

### EFFECT OF THE INVENTION

The present invention stabilizes a position of a tip end portion of a projected portion of a segment coil with respect to a stator core.

### BRIEF DESCRIPTION OF THE DRAWINGS

[FIG. 1] FIG. 1 is a schematic perspective view illustrating a stator according to an embodiment 1 of the present invention.
[FIG. 2] FIG. 2 is an enlarged sectional view partially illustrating the stator of FIG. 1.
[FIG. 3] FIG. 3 is an enlarged view illustrating projected portions of the stator of FIG. 1.
[FIG. 4] FIG. 4 is a side view illustrating a device for manufacturing a stator according to the embodiment 1.
[FIG. 5] FIG. 5 is an enlarged side view illustrating a state at the start of bending for the projected portions according to a method for manufacturing a stator of the embodiment 1.
[FIG. 6] FIG. 6 is an enlarged side view illustrating a state during insertion of teeth of a bending jig with respect to the projected portions according to the method for manufacturing a stator of the embodiment 1.
[FIG. 7] FIG. 7 is an enlarged side view illustrating an insertion state of the teeth of the bending jig with respect to the projected portions according to the method for manufacturing a stator of the embodiment 1.
[FIG. 8] FIG. 8 (A) and FIG. 8 (B) are enlarged side views illustrating the bending of the projected portions according to the method for manufacturing a stator of the embodiment 1.
[FIG. 9] FIG. 9 is an enlarged side view illustrating additional bending of the projected portions according to the method for manufacturing a stator of the embodiment 1.
[FIG. 10] FIG. 10 is an enlarged side view illustrating bending-back of the projected portions according to the method for manufacturing a stator of the embodiment 1.
[FIG. 11] FIG. 11 is an enlarged side view illustrating bending-back of projected portions according to a method for manufacturing a stator of an embodiment 2 of the present invention.
[FIG. 12] FIG. 12 is an enlarged side view illustrating bending-back of projected portions according to a method for manufacturing a stator of an embodiment 3 of the present invention.
[FIG. 13] FIG. 13 is an enlarged side view illustrating additional bending of the projected portions after the bending-back according to the method for manufacturing a stator of the embodiment 3.

### EMBODIMENT FOR CARRYING OUT THE INVENTION

The object of stabilizing a position of a tip end portion of a projected portion of a segment coil with respect to a stator core is accomplished by bending back a projected portion after bending.

A method for manufacturing a stator displaces a tip end portion 10a of a projected portion 9, which is relative to a stator core 3, of a segment coil 7 held by the stator core 3 to one of an outer side and an inner side in a radial direction of the stator core 3 to bend the projected portion 9 so as to be positioned at a first position. Thereafter, the tip end portion 10a of the bent projected portion 9 is displaced to the other of the outer side and the inner side in the radial direction to bend back a bent portion of the projected portion 9 so that the tip end portion of the bent projected portion is positioned at a second position displaced to said one of the outer side and the inner side in the radial direction with respect to an initial position before the bending.

The bending and the bending-back may be performed while a base end portion 10b of the projected portion 9 is along an axial direction of the stator core 3.

Further, the bending and the bending-back may be performed while the tip end portion 10a of the projected portion 9 is along the axial direction.

Alternatively, the bending and the bending-back may be performed while the tip end portion 10a is along an intermediate portion 10c. In this case, the tip end portion 10a may be additionally bent with respect to the intermediate portion 10c to be along the axial direction after the bending-back.

Alternatively, the bending may be performed while the tip end portion 10a is along the intermediate portion 10c, and after the bending, the tip end portion 10a may be additionally bent with respect to the intermediate portion 10c to be along the axial direction. In this case, the bending-back is performed while the tip end portion 10a is along the axial direction.

The manufacturing device 15 for a stator is to bend the projected portion 9 of the segment coil 7, and is provided with tooth 25a, 25b, or 25c and a drive unit 17. The tooth 25a, 25b, or 25c is disposed on at least one side relative to the tip end portion 10a of the projected portion 9 in the radial direction of the stator core 3. The drive unit 17 moves the tooth 25a, 25b, or 25c in the radial direction to displace the tip end portion 10a of the projected portion 9 in the radial direction.

The manufacturing device 15 displaces the tip end portion 10a of the projected portion 9 to one of the outer side and the inner side in the radial direction to bend the projected portion 9 so as to be positioned at a first position. Thereafter, the tip end portion 10a of the bent projected portion 9 is displaced to the other of the outer side and the inner side in the radial direction to bend back bent portions 12a and 12b of the projected portion 9 so that the tip end portion of the bent projected portion is positioned at a second position displaced to said one of the outer side and the inner side in the radial direction with respect to an initial position before the bending.

The manufacturing device 15 may be provided with a restraining body 20. The restraining body 20 restrains the base end portion 10b of the projected portion 9 in the radial direction to hold the base end portion 10b of the projected portion 9 along the axial direction of the stator core 3 at the time of the bending and the bending-back.

The tooth 25a, 25b, or 25c may be disposed on each side of the projected portion 9 in the radial direction. In this case, the tip end portion 10a of the projected portion 9 is held along the axial direction using the tooth 25a, 25b, or 25c on each side in the radial direction during the bending and the bending-back.

Further, the manufacturing device 15 may be provided with a pusher 21 movable in the radial direction with respect to the tooth 25. In this case, the bending and the bending-back are performed by moving the tooth 25a in the radial direction while the tip end portion 10a is along the intermediate portion 10c. After the bending-back, the tip end portion 10a is pressed against the tooth 25a by the pusher 21 to additionally bend the tip end portion 10a with respect to the intermediate portion 10c to be along the axial direction.

Instead, if the manufacturing device 15 includes the pusher 21, the tip end portion 10a may be pressed against the tooth 25a by the pusher 21 after the bending, and the tip end portion 10a may be additionally bent with respect to the intermediate portion 10c to be along the axial direction. In this case, the bending-back may be performed by moving the tooth 25a to the other of the outer side and the inner side in the radial direction while the tip end portion 10a is along the axial direction.

In this case, the bending-back may be performed by moving the pusher 21 together with the tooth 25a while the tip end portion 10a is pressed against the tooth 25a.

### EMBODIMENT 1

### [Stator]

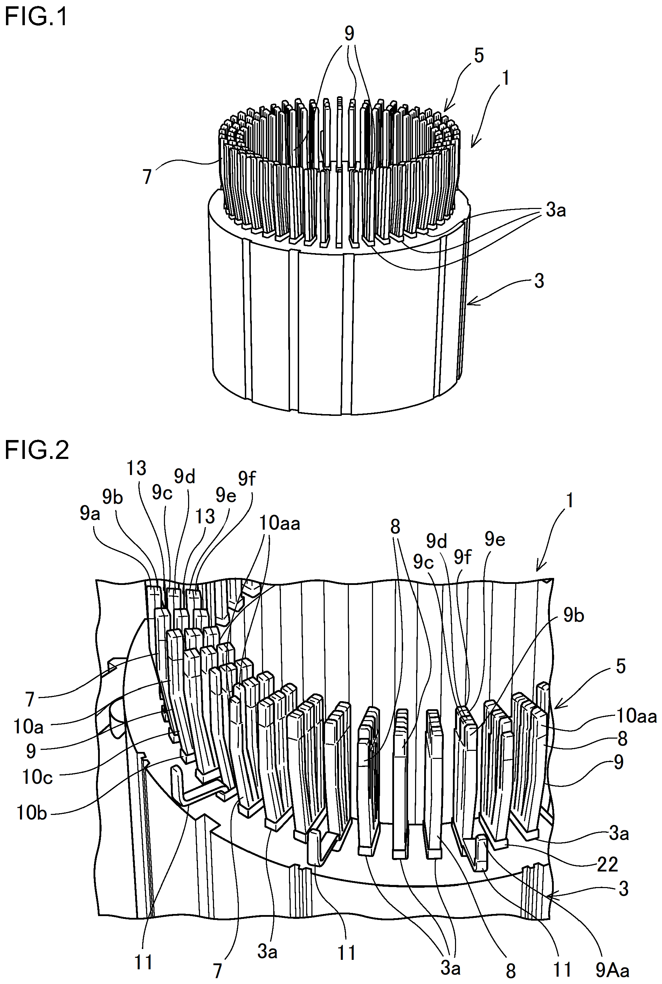

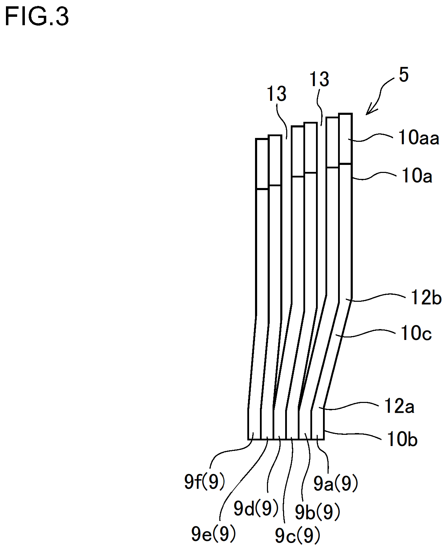

FIG. 1 is a schematic perspective view illustrating a stator according to the embodiment 1 of the present invention. FIG. 2 is an enlarged sectional view partially illustrating the stator of FIG. 1. FIG. 3 is an enlarged view illustrating projected portions of the stator of FIG. 1.

A stator 1 of FIGS. 1 and 2 forms a rotating electric machine together with a rotor that is not illustrated. The rotating electric machine is configured as, for example, a 3-phase (U-phase, V-phase, and W-phase) AC permanent magnet synchronous motor with 8 poles.

FIGS. 1 and 2 illustrate a state that a stator coil 5 is incorporated in a stator core 3. In the state of FIG. 1, a tip end portion 10a of a projected portion 9 of each segment coil 7 composing the stator coil 5 is in a state along an axial direction (a state that the projected portion 9 is not bent in a circumferential direction). The axial direction is a direction along an axis of the stator core 3. The circumferential direction is a direction along an outer periphery of the stator core 3.

Relative to the state of FIG. 1, the projected portions 9 are bent in the circumferential direction, and then joined by welding to form the stator coil 5. Thereafter, insulating coating is conducted to coil ends 10aa of the projected portions 9, and resin encapsulation is conducted to a portion of the stator coil 5 and the like to form the stator 1 for a rotating electric machine. In the following explanation, one illustrated in FIG. 1 is referred to as the stator 1 for convenience.

As mentioned above, the stator 1 is provided with the stator core 3 and the stator coil 5. The stator core 3 is formed by laminating, for example, a plurality of annular electromagnetic steel sheets or silicon steel sheets. The stator core 3 is provided with a plurality of slots 3a at equal intervals in the circumferential direction.

The stator coil 5 is provided for three phases in the stator core 3 and is configured into a wave-winding shape. The stator coil 5 is composed of a plurality of the segment coils 7.

As illustrated in FIGS. 1 to 3, each segment coil 7 is, for example, a rectangular flat wire having a rectangular cross section formed into a U shape, for example, a hairpin shape. In addition, the sectional shape and the like of the segment coil 7 are not particularly limited. The plurality of the segment coils 7 are combined in the circumferential direction with respect to the stator core 3.

In each segment coil 7, leg portions 8 including coil ends 10aa having no insulating layer are inserted into the slots 3a of the stator core 3. Accordingly, the segment coils 7 are held by the stator core 3. In addition, the insulating layer is formed on an entire part of the segment coil 7 other than the coil ends 10aa.

The leg portions 8 of the segment coil 7 pass through the stator core 3. With this, a part of the leg portion 8 including the coil end 10aa is projected from the stator core 3 in the axial direction to form the projected portion 9. In addition, FIG. 1 and FIG. 2 illustrate a state in which the leg portions 8 of the segment coils 7 are assembled to the stator core 3 from below and are projected upward.

The projected portions 9 are arranged in a row in the radial direction in each slot 3. In the present embodiment, an outermost first projected portion 9a to an innermost sixth projected portion 9f are arranged in the slot 3a according to the layers of the stator coil 5.

It should be noted that the first projected portion 9a (and the first projected portion 9Aa described later) to the sixth projected portion 9f on the innermost periphery mean the projected portions 9 in the same slot 3a, and are particularly used to identify the projected portions 9 in each slot 3.

In the slot 3a having the power line 11, the power line 11 is formed by bending the first projected portion 9Aa for the power line, and the second projection 9b to the sixth projection 9f are located in the slot 3a together with the power line 11.

A radial gap 13 is formed between the tip end portions 10a of the projected portions 9 of the adjacent layers. The gaps 13 facilitate bending of the projected portions 9 in the circumferential direction in the post-process. The gaps 13 are defined by bending the projected portions 9 in the radial direction.

The projected portion 9 has bent portions 12a and 12b between the base end portion 10b and the intermediate portion 10c and between the tip end portion 10a and the intermediate portion. The base end portion 10b and the tip end portion 10a are along the axial direction, and the intermediate portion 10c is inclined outward in the radial direction from the base end portion 10b toward the tip end portion 10a.

In addition, the tip end portion 10a and the base end portion 10b do not need to be strictly along the axial direction, and include a case where the tip end portion and the base end portion are slightly inclined with respect to the axial direction. An inclination of the intermediate portion 10c is inclined more than the tip end portion 10a if the tip end portion 10a is slightly inclined with respect to the axial direction.

### [Device and method for manufacturing stator]

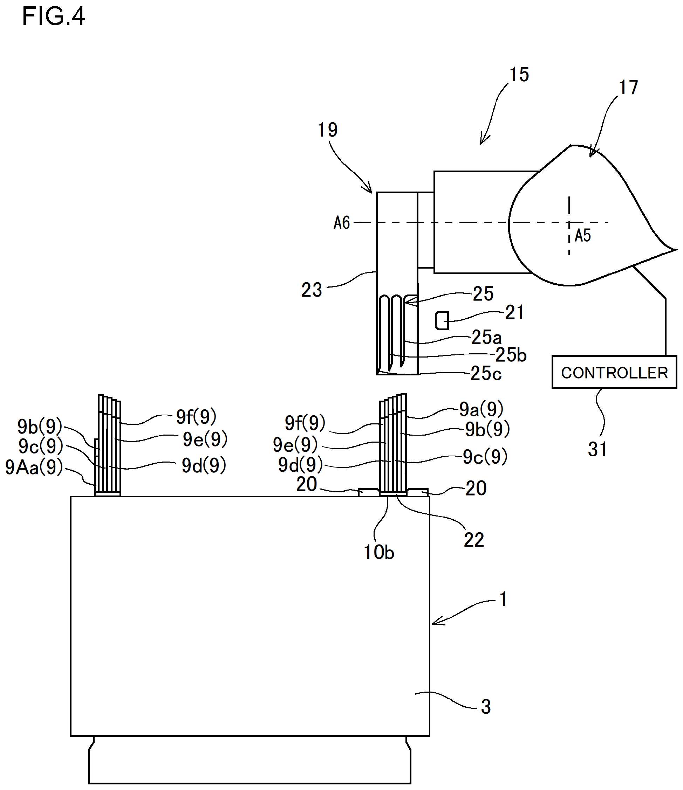

FIG. 4 is a side view illustrating a device for manufacturing a stator according to the embodiment 1.

In the present embodiment, the stator 1 is manufactured using the manufacturing device 15 in FIG. 4. The manufacturing device 15 is provided with a robot manipulator 17 as a drive unit, a bending jig 19, a clamp 20 as a restraining body, a pusher 21, and a controller 31.

The robot manipulator 17 is composed of, for example, a six-axis vertical articulated robot. The bending jig 19 as an end effector is attached to an end portion of the robot manipulator 17. In addition, although only one robot manipulator 17 is illustrated in FIG. 4, it is not limited thereto and a plurality of robot manipulators 17 may be provided in the circumferential direction of the stator 1.

The bending jig 19 is for forming the gap 13 between the projected portions 9 of the adjacent layers. It should be noted that formation of the gap 13 may be performed separately by different jigs or the like. Further, the bending jig 19 may be used for forming the power line 11.

The bending jig 19 is provided with a main body portion 23 and comb teeth 25.

The main body portion 23 has a plate shape made of, for example, metal. The comb teeth 25 are provided on one side surface of the main body portion 23. In addition, the shape and material of the main body 23 may be arbitrarily set.

The comb teeth 25 include a plurality of, three teeth 25a, 25b, and 25c in this embodiment arranged at intervals in an axial direction of a sixth axis A6 of the robot manipulator 17. The teeth 25a, 25b, and 25c are formed in plate shapes.

The teeth 25a, 25b, and 25c are extend in a direction away from the sixth axis A6, and tips thereof are pointed in a single-edged shape. The teeth 25a, 25b, and 25c are arranged along the axial direction of the stator core 3 in a state where an arrangement direction coincides with the radial direction of the stator 1 along which the projected portions 9 are arranged in the slot 3a, and surfaces inclined in the single-edged shape face outward in the radial direction. Further, in this state, the tooth 25c on an inner side to the tooth 25c on an outer side in the radial direction are sequentially shortened in the axial direction.

The clamp 20 is formed in a plate shape by metal or the like, for example. The clamp 20 holds the base end portions 10b of the projected portions 9 in the slot 3a inside and outside in the radial direction. With this holding, an insulating paper 22 between the slot 3a and the projected portions 9 is protected, and starting points of the bending of the projected portions 9 are formed. In the clamp 20 of the present embodiment, the base end portion 10b of the projected portion 9 is restrained from the radial direction, and the base end portion 10b of the projected portion 9 is held in along the axial direction of the stator core 3 at the time of the bending and bending-back.

The pusher 21 is a columnar shape formed of resin or the like. The pusher 21 is movable so as to approach and separate from the tooth 25a in an outside in the direction along the sixth axis A6 of the robot manipulator 17.

A moving direction of the pusher 21 is the radial direction that is a direction orthogonal to the axial direction, the axial direction being a direction of insertion of the tooth 25a between the projected portions 9. The moving direction of the pusher 21, however, may be a direction inclined with respect to the radial direction and the sixth axis A6. Even if the moving direction of the pusher 21 is inclined with respect to the radial direction, the pusher 21 moves in the radial direction with respect to the tooth 25a as long as there is a radially moving component.

Movement of the pusher 21 may be performed by an appropriate actuator such as a linear actuator. Supporting of the pusher 21 may be performed to the robot manipulator 17 or other members.

The controller 31 is a computer having a processor, a memory and the like. In addition, in FIG. 4, the controller 31 is only conceptually illustrated.

The controller 31 controls the bending jig 19, i.e. the teeth 25a, 25b, and 25c, and the pusher 21 through the robot manipulator 17. Through this control, a method for manufacturing the stator 1 is realized.

Hereinafter, a method for manufacturing the stator 1 will be explained as control of the manufacturing device 15 by the controller 31.

In the manufacturing method of the stator 1, interlayer expansion is performed. As illustrated in FIGS. 1 to 3, in the interlayer expansion, it enlarges between the projected portions 9 of the adjacent layers in the slot 3a to form the gaps 13.

As illustrated in FIG. 4, the present embodiment holds the stator 1 at a predetermined position, to arrange the stator core 3 so that the axial direction of the stator core is along the vertical direction, first. At this time, the clamps 20 hold the base end portions of the projected portions 9. Particularly, the clamps 20 collectively hold the first projected portions 9a to the sixth projected portions 9f from the inside and the outside in the radial direction.

Accordingly, the protection of the insulating papers 22 and starting points of the bending of the projected portions 9 are established as mentioned above. Further, the clamps 20 restrain the base end portions 10b of the projected portions 9 in the radial direction, and the base end portions 10b of the projected portions 9 are held along the axial direction of the stator core 3.

It should be noted that the first projected portion 9a to the sixth projected portion 9f before bending are along the axial direction as a whole, and the lengths thereof in the axial direction are gradually reduced from the first projected portion 9a to the sixth projected portion 9f in each slot 3a.

The bending jig 19 is positioned above the stator 1 by the robot manipulator 17. At this time, the teeth 25a, 25b, and 25c of the comb teeth 25 of the bending jig 19 are along the axial direction, and the single-edged inclined surfaces are oriented outward in the radial direction of the stator core 3.

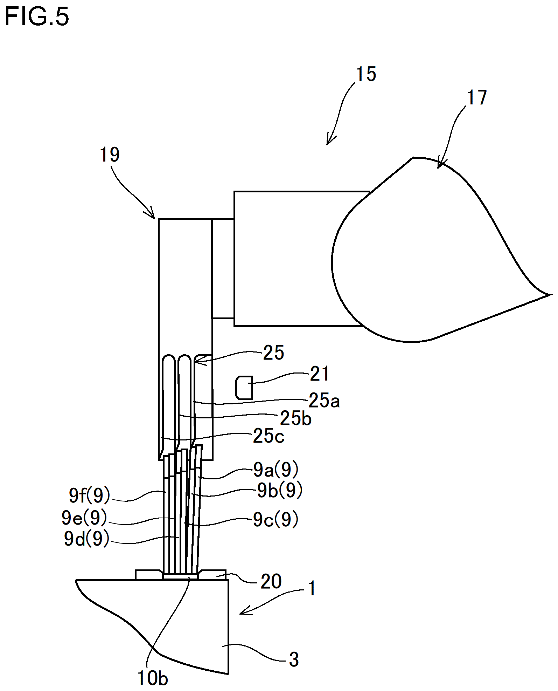

FIG. 5 is an enlarged side view illustrating a state at the start of the bending for the projected portions.

As illustrated in FIG. 5, the bending jig 19 is moved toward the stator core 3 and moved in the radial direction. Accordingly, the tips of the teeth 25a, 25b, and 25c of the comb teeth 25 of the bending jig 19 are brought into radially contact with the projected portions 9 (the second, the fourth, and the sixth projected portions 9b, 9d, and 9f) in the present embodiment located radially inward in the respective layers. This contact is performed based on the difference in the axial length of the teeth 25a, 25b, and 25c, and the difference in the axial length of the projected portions 9.

With this, the tips of the teeth 25a, 25b, and 25c of the comb teeth 25 are located between the projected portions 9 of the adjacent layers. Namely, the tooth 25a is located between the second and the third projected portions 9b and 9c, and the tooth 25b is located between the fourth and the fifth projected portions 9d and 9e. Further, the tooth 25c is located on the inside of the sixth projected portion 9f in the radial direction.

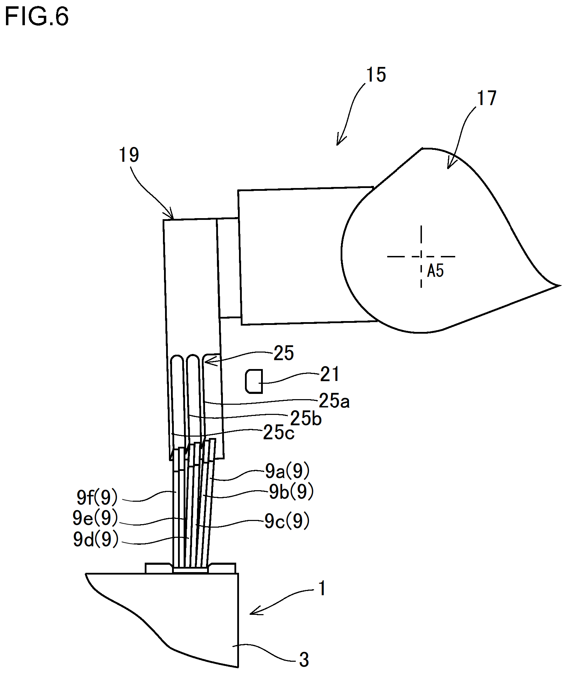

FIG. 6 is an enlarged side view illustrating a state during the insertion of the teeth of the bending jig with respect to the projected portions.

As illustrated in FIG. 6, the bending jig 19 is further moved toward the stator core 3 in the axial direction by the robot manipulator 17. Thus, the teeth 25a and 25b of the comb teeth 25 are inserted between the second and the third projected portions 9b and 9c and between the fourth and the fifth projected portions 9d and 9e, which are between the projected portions 9 of the adjacent layers.

In this insertion, the bending jig 19 is inclined around an axis line orthogonal to the radial direction of the stator core 3 being the arrangement direction of the teeth 25a, 25b, and 25c of the comb teeth 25 and the axial direction of the stator core 3, around the fifth axis A5 of the robot manipulator 17 in this embodiment. As a result, the tips of the teeth 25a, 25b, and 25c of the comb teeth 25 are not in contact with the insulating layers of the projected portions 9.

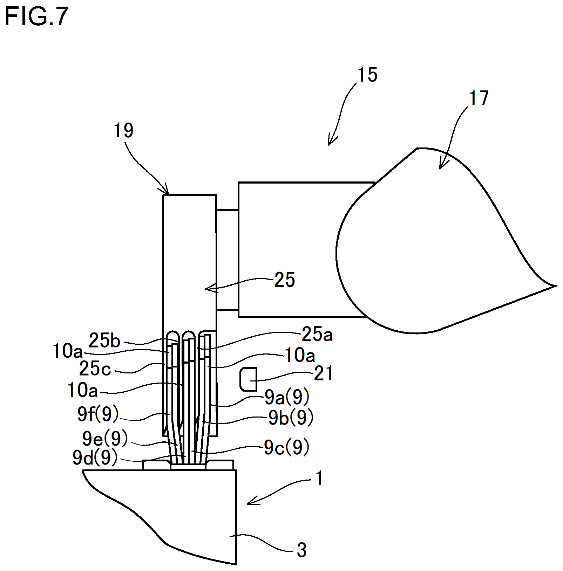

FIG. 7 is an enlarged side view illustrating an insertion state of the teeth of the bending jig with respect to the projected portions.

In the insertion process of the teeth 25a, 25b, and 25c, the bending jig 19 is moved by the robot manipulator 17 so that the teeth 25a, 25b, and 25c are along the axial direction again as illustrated in FIG. 7.

In a state in which the teeth 25a, 25b, and 25c of the comb teeth 25 are completely inserted between the layers, the third and the fourth projected portions 9c and 9d are accommodated between the teeth 25a and 25b along the axial direction. In addition, the first and the second projected portions 9a and 9b and the fifth and the sixth projected portions 9e and 9f are slightly expanded outward and inward in the radial direction by the teeth 25b and 25c, respectively. Although this expansion may be elastic deformation of the projected portions 9, the expansion may be plastic deformation.

In this state, the teeth 25a and 25b are disposed on both sides of the tip end portions 10a of the third and the fourth projected portions 9c and 9d in the radial direction. In addition, the tooth 25a is disposed on one side of the third projected portion 9c in the radial direction, and the tooth 25b is disposed on the other side of the third projected portion in the radial direction through the fourth projected portion 9d. The tooth 25b is disposed on one side of the fourth projected portion 9d in the radial direction and the tooth 25a is disposed on the other side of the fourth projected portion in the radial direction through the third projected portion 9c.

Similarly, the teeth 25b and 25c are disposed on both sides of the tip end portions 10a of the fifth and the sixth projected portions 9e and 9f in the radial direction.

The tooth 25a is disposed on one side of the tip end portions 10a of the first and the second projected portions 9a and 9b in the radial direction. The tooth 25a is disposed adjacently on one side of the second projected portion 9b in the radial direction, and the tooth 25b is disposed on one side of the first projected portion 9a in the radial direction through the second projected portion 9b.

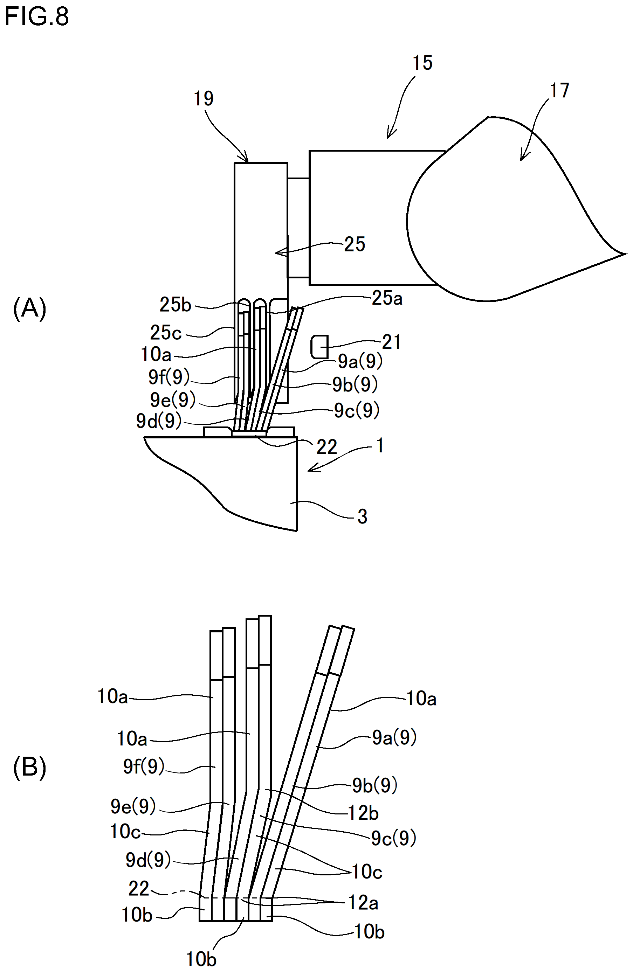

FIG. 8(A) is an enlarged side view illustrating the bending of the projected portions, and FIG. 8(B) is an enlarged view illustrating the projected portions of FIG. 8(A).

As illustrated in FIGS. 8(A) and 8(B), the bending jig 19 is moved radially outward by the robot manipulator 17. This displaces the tip end portions 10a of the projected portions 9 on the stator core 3 outward in the radial direction of the stator core 3 to bend the projected portions 9 so as to be positioned at the first positions.

It should be noted that the bending jig 19 may be moved inward in the radial direction according to specifications of the stator core 1. In this case, the tip end portions 10a of the projected portions 9 move inward in the radial direction to be bent. The bending of the projected portions 9, therefore, may be to move the tip end portions 10a to one of the inner side and the outer side in the radial direction.

The first position is a position on the outer side than the second position in the radial direction, and the second position is on the outer side than the initial position in the radial direction. In both the first position and the second position, if the tip end portions 10a are along the axial direction, the first position and the second position may be simply considered by the positions of the tip end portions 10a. In this case, the second position is a position of the tip end portion 10a of the projected portion 9 to be positioned in order to perform the post-process, and the first position is a position at which the tip end portion 10a is displaced excessively beyond the second position with respect to the initial position in the radial direction. At the first position, a bending amount of the tip end portion 10a, therefore, becomes excessive as compared with the second position. It should be noted that, if the tip end portion 10a is inclined together with the intermediate portion 10c at the first position and the tip end portion 10a is along the axial direction at the second position, the first position and the second position may be considered according to an inclination amount of the intermediate portion 10c. The position where the inclination amount of the intermediate portion 10c is relatively large is the first position, and the position where the inclination amount of the intermediate portion 10c is relatively small is the second position. The inclination amount may be an angle formed by the axial direction and the intermediate portion 10c.

In the bending, the base end portions 10b of the first to the sixth projected portions 9a to 9f are held along the axial direction of the stator core 3 using the clamps 20. Further, the tip end portions 10a of the third to the sixth projected portions 9c to 9f are held along the axial direction using the teeth 25a to 25c on both sides in the radial direction.

The third to the sixth projected portions 9c to 9f are, therefore, bent so that the bent portions 12a and 12b are between the tip end portions 10a and the base end portions 10b, which are along the axial direction, and the inclined intermediate portions 10c. The inclination of the intermediate portion 10c is inclined outward from the base end portion 10b toward the tip end portion 10a.

On the other hand, since no tooth is on the outer side of the first and the second projected portions 9a and 9b in the radial direction, the first and the second projected portions are bent at portions between the base end portions 10b and the intermediate portions 10c as the bent portions 12a. As a result, the first and the second projected portions 9a and 9b are inclined as a whole from the intermediate portions 10c to the tip end portions 10a.

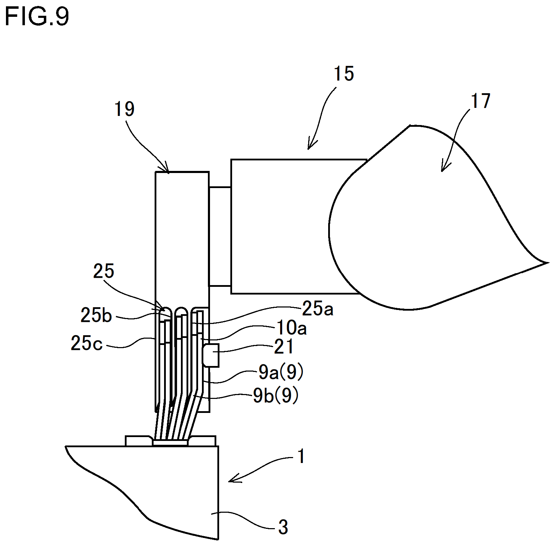

FIG. 9 is an enlarged side view illustrating additional bending of the projected portions.

As illustrated in FIG. 9, the tip end portions 10a of the first and the second projected portions 9a and 9b are pressed against the tooth 25a from the outside in the radial direction by the pusher 21. With this, the tip end portions 10a of the first and the second projected portions 9a and 9b are additionally bent to be along the axial direction.

Thereafter, the pusher 21 is separated away from the tip end portions 10a of the first and the second projected portions 9a and 9b, and the bending-back is performed.

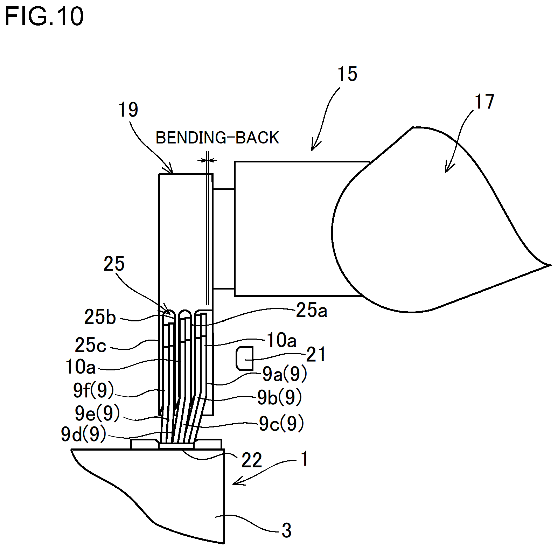

FIG. 10 is an enlarged side view illustrating the bending-back of the projected portions. In addition, the details of the projected portion 9 will be referred to FIG. 3.

As illustrated in FIG. 10 and FIG. 3, the bending jig 19 is moved radially inward by the robot manipulator 17. This bends back the bent portions 12a and 12b of the projected portions 9 so that the tip end portions 10a of the projected portions 9 are located at the second positions.

The radially inward movement of the bending jig 19 may be a case that the bending jig 19 is moved only in the radial direction or a case that the bending jig 19 is moved in the radial direction and the axial direction. If the bending jig 19 is moved in the radial direction and the axial direction, the bending jig 19 may be moved obliquely linearly or to draw an arc.

The bending-back means that the bent portions 12a and 12b are bent (plastically deformed) inward in the radial direction, which is in the opposite direction, and that the bending amount outward in the radial direction is reduced. The bending amount may be considered as a dimension in the radial direction between the tip end portion 10a and the base end portion 10b.

In addition, if the bending is performed inward in the radial direction, the bending-back is performed by bending outward in the radial direction that is in the reverse direction. The bending-back, therefore, may is to move the tip end portion 10a to the other of the inner side and the outer side in the radial direction. The other of the inner side and the outer side in the radial direction is the opposite direction to said one of the inner side and the outer side in the radial direction.

The bending-back of the present embodiment is performed while the tip end portion 10a and the base end portion 10b are held along the axial direction. In particular, the tip end portions 10a of the first and the second projected portions 9a and 9b abut against the tooth 25a in the radial direction, the tip end portions of the third and the fourth projected portions 9c and 9d are held between the teeth 25a and 25b, and the tip end portions of the fifth and the sixth projected portions 9e and 9f are held between the teeth 25b and 25c.

According to this bending-back, the present embodiment suppresses the spring-back of the projected portions 9 disposed at the second positions, to suppress variation in the position of the tip end portion 10a. Although the tip end portions 10a of the first and the second projected portions 9a and 9b on the outer side in the radial direction perform the bending-back operation, the bending-back (plastic deformation) is not performed. As compared with the other projected portions 9, the first and the second projected portions 9a and 9 b have large amounts of plastic deformation and are tightly sandwiched between the pusher 21 and the tooth 25a to be bent. The tip end portions 10a of the first and the second projected portions 9a and 9b have stable spring-back amounts and are stable in position.

Thus, the bending-back with the plastic deformation is performed on at least one part of the projected portions 9. The bending-back with plastic deformation, however, may be performed on all the projected portions 9. The displacement of the tip end portion 10a of the projected portion 9 to the first position may also be performed on at least one part of the projected portions 9 in which the bending-back is performed with plastic deformation.

After the bending-back is performed in this way, the bending jig 19 is displaced away from the stator core 3 by the robot manipulator 17 in the axial direction, and the comb teeth 25 are pulled out from the projected portions 9. Accordingly, the interlayer expansion of the projected portions 9 are completed.

As mentioned above, the present embodiment displaces the tip end portion 10a of the projected portion 9 of the stator core 3 to the outer side in the radial direction of the stator core 3 to bend the projected portion 9 so as to be positioned at the first position. Then, the tip end portion 10a of the bent projected portion 9 is displaced to the inner side in the radial direction to bend back the bent portion of the projected portion 9 so as to be positioned at the second position.

With this, the present embodiment suppresses the spring-back of the tip end portion 10a of the projected portion 9 disposed at the second position, to stabilize the position of the tip end portion 10a. As a result, it is easy to process the projected portion 9 in the post-process.

The bending and the bending-back are performed while the base end portion 10b and the tip end portion 10a of the projected portion 9 is along the axial direction of the stator core 3. Accordingly, those are surely performed at the bent portions 12a and 12b between the base end portion 10b and the tip end portion 10a and the intermediate portion 10c. In addition, since the tip end portion 10a of the projected portion 9 finally has a posture along the axial direction, the position is more reliably stabilized by performing the bending-back while maintaining the final posture thereof.

The first and the second projected portions 9a and 9b are bent while the tip end portion 10a is along the intermediate portion, and after the bending, the tip end portion 10a is additionally bent with respect to the intermediate portion 10c to be along the axial direction. Accordingly, even in the first and the second projected portions 9a and 9b located on the outer side in the radial direction, suppress improvident force is suppressed at the time of the bending, to surely make the tip end portion 10a along the axial direction by the additional bending.

### EMBODIMENT 2

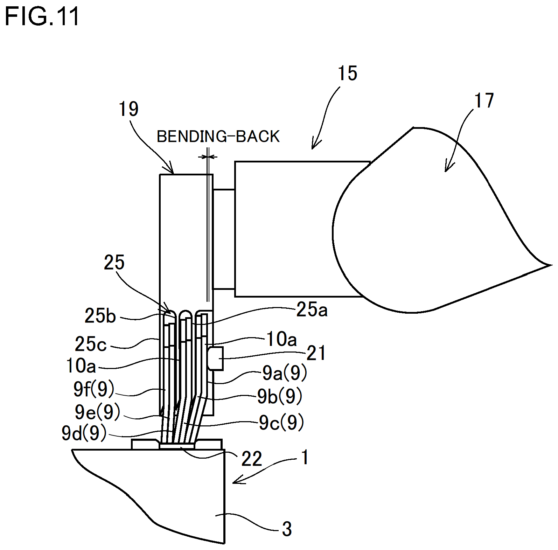

FIG. 11 is an enlarged side view illustrating bending-back of projected portions in a method for manufacturing a stator according to the embodiment 2 of the present invention. In addition, the embodiment 2 is in common with the embodiment 1 in the basic configuration, and therefore components corresponding to of the embodiment 1 are represented with the same reference numerals, to omit redundant explanation.

The embodiment 2 performs bending-back so that a pusher 21 having performed additional bending is not separated from a tip end portion 10a of a first and a second projected portions 9a and 9b as illustrated in FIG. 11.

The embodiment is the same as the embodiment 1 up to the additional bending by the pusher 21 of the first and the second projected portions 9a and 9b and is referred to the embodiment 1. Further, details of the projected portion 9 is referred to FIG. 3 at the time of the bending-back.

In the bending-back, the bending jig 19 is moved radially inward by the robot manipulator 17 and the pusher 21 is moved to follow the tooth 25a. With this, the bent portions 12a and 12b of the projected portions 9 are bent back so that the tip end portions 10a of the projected portions 9 are located at second positions.

The present embodiment performs the bending-back of the first and the second projected portions 9a and 9b in addition to the effects of the embodiment 1. As a result, the present embodiment more surely stabilizes the position of the tip end portion 10a.

### EMBODIMENT 3

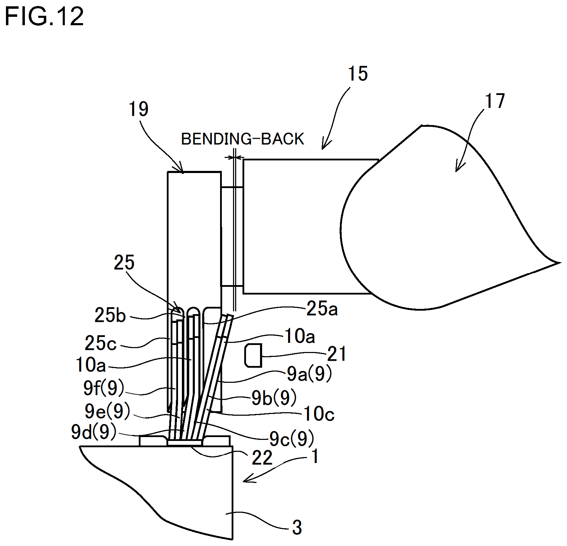

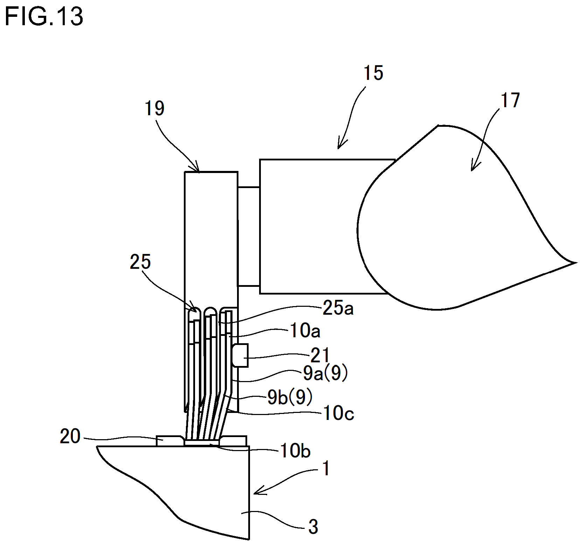

FIG. 12 is an enlarged side view illustrating bending-back of projected portions in a method for manufacturing a stator according to the embodiment 3 of the present invention. FIG. 13 is an enlarged side view illustrating additional bending of the projected portions after the bending-back of FIG. 12. In addition, the embodiment 3 is in common with the embodiment 1 in the basic configuration, and therefore components corresponding to of the embodiment 1 are represented with the same reference numerals, to omit redundant explanation.

The present embodiment performs additional bending of the first and the second projected portions 9a and 9b after bending-back as illustrated in FIG. 12 and FIG. 13.

The embodiment is the same as the embodiment 1 up to bending of a first to a sixth projected portions 9a to 9f, and therefore is referred to the embodiment 1.

After the bending, it performs bending-back of the first to the sixth projected portions 9a to 9f as illustrated in FIG. 12. At the time of the bending-back, the bending jig 19 is moved inward in the radial direction by the robot manipulator 17. With this, the bending-back of the third to the sixth projected portions 9c to 9f are performed similar to the embodiment 1 and the bending-back of the first and the second projected portions 9a and 9b is performed while the tip end portions 10a are along the intermediate portions 10c.

Next, the additional bending of the first and the second projected portions 9a and 9b is performed by the pusher 21 as illustrated in FIG. 13. Namely, the tip end portions 10a of the first and the second projected portions 9a and 9b are pressed against the tooth 25a from an outside in the radial direction by the pusher 21. As a result, the tip end portions 10a of the first and the second projected portions 9a and 9b are additionally bent to be along the axial direction.

The bent portions 12a and 12b (see FIG. 3) between the tip end portions 10a and the intermediate portions 10c of the first and the second projected portions 9a and 9b are less than the bent portion between the base end portion 10b and the intermediate portion 10c in the spring-back, and do not need the bending-back.

Thereafter, the pusher 21 is separated from the tip end portions 10a of the first and the second projected portions 9a and 9b. Then, the bending jig 19 is moved in the axial direction away from the stator core 3 by the robot manipulator 17. In this way, the interlayer expansion of the projected portions 9 is completed.

Even the present embodiment provides the same effects as those of the embodiment 1.

### DESCRIPTION OF NUMERALS

1 Stator
3 Stator core
5 Stator coil
7 Segment coil
9 Projected portion
10a Tip end portion
10b Base end portion
10c Intermediate portion
15 Manufacturing device
17 Robot manipulator (Drive unit)
20 Clamp (Restraining body)
21 Pusher
25a, 25b, and 25 c Tooth

## Claims

1. A method for manufacturing a stator, comprising:
displacing a tip end portion of a projected portion, which is relative to a stator core, of a segment coil held by the stator core to one of an outer side and an inner side in a radial direction of the stator core to bend the projected portion so as to be positioned at a first position; and
displacing the tip end portion of the bent projected portion to the other of the outer side and the inner side in the radial direction to bend back a bent portion of the projected portion so as to be positioned at a second position displaced to said one of the outer side and the inner side in the radial direction with respect to an initial position before the bending.

2. The method for manufacturing a stator according to claim 1, wherein
the bending and the bending-back are performed while a base end portion of the projected portion is along an axial direction of the stator core.

3. The method for manufacturing a stator according to claim 2, wherein
the bending and the bending-back are performed while the tip end portion of the projected portion is along the axial direction.

4. The method for manufacturing a stator according to claim 2, wherein
the bending and the bending-back are performed while the tip end portion is along the intermediate portion, and
the tip end portion is additionally bent with respect to the intermediate portion to be along the axial direction after the bending-back.

5. The method for manufacturing a stator according to claim 2, wherein
the bending is performed while the tip end portion is along the intermediate portion,
the tip end portion is additionally bent with respect to the intermediate portion to be along the axial direction after the bending, and
the bending-back is performed while the tip end portion is along the axial direction.

6. A device for manufacturing a stator to bend projected portion, which is relative to a stator core, of a segment coil held by the stator core, comprising:
a tooth disposed on at least one side in a radial direction of the stator core with respect to a tip end portion of the projected portion; and
a drive unit that moves the tooth in the radial direction to displace the tip end portion of the projected portion in the radial direction, wherein
the tip end portion of the projected portion is displaced to one of an outer side and an inner side in the radial direction to bend the projected portion so as to be positioned at a first position, and
the tip end portion of the bent projected portion is displaced to the other of the outer side and the inner side in the radial direction to bend back bent portion of the projected portion so that the tip end portion of the bent projected portion is positioned at a second position displaced to said one of the outer side and the inner side in the radial direction with respect to an initial position before the bending.

7. The device for manufacturing a stator according to claim 6, further comprising:
a restraining body that restrains a base end portion of the projected portion in the radial direction to hold the base end portion of the projected portion while the base end portion of the projected portion is along the axial direction of the stator core at the time of the bending and the bending-back.

8. The device for manufacturing a stator according to claim 7, wherein
the tooth is disposed on each side of the tip end portion of the projected portion in the radial direction, and
the tip end portion of the projected portion is held along the axial direction using the tooth on each side in the radial direction during the bending and the bending-back.

9. The device for manufacturing a stator according to claim 7, further comprising:
a pusher that is movable in the radial direction with respect to the tooth, wherein
the bending and the bending-back are performed by moving the tooth in the radial direction while the tip end portion is along the intermediate portion, and
the tip end portion is pressed against the tooth by the pusher to additionally bend the tip end portion with respect to the intermediate portion to be along the axial direction after the bending-back.

10. The device for manufacturing a stator according to claim 7, further comprising:
a pusher that is movable in the radial direction with respect to the tooth, wherein
the bending is performed by moving the tooth to one of an outer side and an inner side in the radial direction while the tip end portion is along the intermediate portion,
the tip end portion is pressed against the tooth by the pusher to additionally bend the tip end portion with respect to the intermediate portion to be along the axial direction after the bending, and
the bending-back is performed by moving the tooth to the other of the outer side and the inner side in the radial direction while the tip end portion is along the axial direction.

11. The device for manufacturing a stator of claim 10, wherein
the bending-back is performed by moving the pusher together with the tooth while the tip end portion is pressed against the tooth.
